# FASCICULE DE BREVET EUROPEEN

(11) **EP 0 728 189 B1**
(45) Date de publication et mention de la délivrance du brevet: **14.01.1998**
(21) Numéro de dépôt: 95900806.1
(22) Date de dépôt: 07.11.1994
(51) Int. Cl.: C12G 1/00, A23L 2/02

(54) **PRODUIT ALIMENTAIRE, OBTENTION ET APPLICATION A LA FABRICATION DE JUS DE FRUITS OU DE VIN**
NAHRUNGSMITTEL, SEINE HERSTELLUNG UND SEINE ANWENDUNG ZUM HERSTELLEN VON FRUCHTSÄFTEN ODER WEIN
FOOD PRODUCT, PREPARATION THEREOF AND USE THEREOF FOR MAKING FRUIT JUICES OR WINE

(30) Priorité: 08.11.1993 FR 9313287
(43) Date de publication de la demande: 28.08.1996
(73) Titulaire: INSTITUT NATIONAL DE LA RECHERCHE AGRONOMIQUE, F-75341 Paris Cédex 07 (FR)
(72) Inventeur: ESCUDIER, Jean-Louis, F-11110 Armissan (FR); MOUTOUNET, Michel, F-34080 Montpellier (FR); COGAT, Pierre, Olivier, F-92260 Fontenay-aux-Roses (FR)
(74) Mandataire: Phélip, Bruno
(86) Numéro de dépôt international: FR9401295
(87) Numéro de publication internationale: WO9513360

(56) Documents cités:
- FR-A- 2 638 333
- FR-A- 2 656 547

## Description

L'invention concerne un produit alimentaire pour l'élaboration de jus ou de vins de qualités organoleptiques améliorées. Dans ce produit, les composés non volatils souhaités, compte tenu de la nature des baies et de leur destination, sont présents, sous forme extraite, dans des proportions équilibrées et plus importantes que dans les produits connus obtenus à partir de baies identiques.

L'invention concerne également un procédé d'obtention d'un tel produit.

On sait que la qualité des jus et des vins obtenus à partir de baies de nature quelconque, tient à la concentration en arômes, précurseurs d'arômes et/ou composés polyphénoliques. Il est donc essentiel de disposer de produits destinés à l'élaboration de jus ou de vin et dont la concentration en composés non volatils, et en particulier en composés polyphénoliques et/ou en précurseurs d'arômes, est accrue par rapport à des baies, traitées ou non par des procédés connus, avant d'être pressées pour fournir un jus ou pour obtenir un vin, après fermentation.

Si l'on s'intéresse plus particulièrement aux baies de raisin, destinées à être vinifiées, on sait que les composés non volatils recherchés ne sont pas les mêmes pour des vins rouges que pour des vins blancs. En effet, pour des vins rouges, on souhaite obtenir des composés polyphénoliques en quantité importante alors que pour des vins blancs, il convient d'éviter la présence des composés polyphénoliques en trop grande quantité car ceux-ci rendraient le vin atypique et trop coloré. On souhaite par contre obtenir des composés aromatiques en quantité importante.

Les jus de baies de nature quelconque et en particulier, le jus de raisin et le vin, ne contiennent pas tous les constituants des baies tel que le raisin.

Ils sont obtenus à partir d'une extraction fractionnée des substances solubles contenues dans différents tissus de la baie. Leur qualité dépend du choix d'un mode d'extraction et de sa réalisation. Le type de jus et en particulier de jus de raisin ou de vin, et dans ce type, sa qualité sont en rapport avec la manière dont est dirigé ce fractionnement.

On sait que la couleur, l'odeur et la saveur des vins rouges sont liées, pour l'essentiel, à la teneur en composés polyphénoliques. Cette teneur agit sur la qualité, dans un sens positif (charpente, rondeur, gras) ou dans un sens négatif (astringence directe).

Pour un cépage donné, la teneur en composés polyphénoliques dépend de la qualité de la vendange, de l'état de maturité des baies, du millésime, des rendements de la parcelle, de l'état sanitaire de la vigne et du raisin, de l'âge de la vigne.

De nombreux travaux ont été consacrés à l'étude de la composition en anthocyanes et en tanins, qu'il s'agisse du contrôle de l'évolution de ces constituants au cours de la maturation ou de la détermination de leurs concentrations à maturité et de l'influence de certains facteurs climatiques.

Il est maintenant établi que la plus grande partie des polyphénols des vins, et des baies en général, est située dans la pellicule des baies elles-mêmes. La pulpe, à l'exception par exemple des cépages dits teinturiers, est peu riche en composés polyphénoliques. Les pépins contiennent également des composés polyphénoliques mais ceux-ci ont moins d'intérêt au plan gustatif. Ils sont en effet constitués par une proportion élevée de molécules polymérisées qui précipitent avec les protéines.

A la dégustation, on constate que la sensation d'astringence apparaît pour des concentrations plus faibles, dans les solutions des pépins que dans celles des tanins et des pellicules.

En vinification en rouge, 25 % à 50 % des composés polyphénoliques de la pellicule de raisin sont extraits soit dans le moût, soit dans les vins, ce pourcentage dépendant du cépage et aussi de la maturité des baies de raisin. Ce qui n'est pas extrait est perdu dans le marc de raisin.

On peut d'ailleurs montrer que l'extraction des anthocyanes et des composés polyphénoliques est difficile, en partant d'une solution modèle, constituée d'une solution synthétique d'éthanol à 12° d'alcool et de pH 3,3.

Les pellicules détachées de la baie sont mises en contact avec cette solution modèle, pendant plusieurs jours, avec agitation. On constate que dans ces conditions, qui sont pourtant beaucoup plus favorables que celles d'une vinification classique, les baies ne laissent pas diffuser les composés polyphénoliques dans des proportions beaucoup plus élevées. On relève, en effet, une augmentation de 10 % à 25 %, par rapport à une vinification classique.

Ainsi, pour améliorer la qualité d'un jus ou d'un vin, les oenologues cherchent à augmenter les phénomènes d'extraction, tout en conservant un équilibre entre l'ensemble des constituants des jus ou du vin. L'objectif est de mieux extraire les composés qui sont situés dans la pellicule des baies et en particulier des baies de raisin.

Lorsqu'il s'agit de faire des jus ou des vins, le chauffage de la vendange est une bonne technique. Elle consiste à chauffer à 70°C pendant 20 à 30 minutes, puis à pressurer. L'extraction au SO₂ (1,5 g/l) est également possible.

En ce qui concerne les vins, lorsqu'ils sont obtenus par une vinification classique, la majeure partie de ces extractions se produit pendant la phase de fermentation, en présence des parties solides de la baie de raisin. Le raisin induit, en effet, une dynamique de transformation qui est le résultat de son potentiel biochimique. L'élévation de température (25°-32°C) et l'augmentation progressive de la teneur en alcool, liées à la fermentation ainsi que la cuvaison prolongée (8 à 30 jours) avec la mise en oeuvre de remontages répétés, sont des facteurs classiques utilisés par les oenologues pendant la vinification.

D'autres méthodes sont également utilisées pour améliorer l'extraction des composés polyphénoliques.

On peut notamment citer la technique dite de la "macération carbonique". Sous réserve d'une bonne maîtrise du couple temps-température, cette technique permet le développement d'une fermentation intracellulaire qui, à côté de la formation des composés aromatiques spécifiques, crée les conditions d'une bonne dissolution des composés phénoliques. Ce procédé met en jeu le potentiel biochimique du raisin tout en respectant au maximum la structure cellulaire des baies.

On peut également citer la technique consistant à chauffer la vendange, par exemple directement par micro-ondes. Les résultats obtenus montrent qu'en chauffant pendant 20 minutes à 70°C, les extractions sont similaires à celles qui peuvent être obtenues avec une vinification classique (8 jours à 30°C). Les techniques de chauffage sont des variantes utilisées pour des procédés en continu (chauffage pendant 20 minutes suivi d'un pressurage). Elles ne permettent pas d'augmenter de façon significative les extractions, en ce qui concerne les polyphénols.

On peut également citer un procédé connu sous la dénomination de "cell cracking". Ce procédé consiste à comprimer le raisin entre 20 et 60 bars, par de l'air comprimé au gaz, pendant un temps relativement court (1 à 20 minutes). Le raisin est ensuite détendu à pression atmosphérique.

Les résultats obtenus ont montré que la méthode du "cell cracking" ne permet pas d'améliorer les extractions des composés polyphénoliques. En effet, les gains d'extraction restent faibles. Après pressurage direct du raisin ainsi traité, les teneurs en polyphénols restent inférieures à celles obtenues par un simple chauffage de vendange.

Enfin, la technique dite de la "macération finale à chaud" a également été étudiée. Cette technique consiste à réchauffer (entre 40° et 60°C) la vendange, en fin de vinication. Elle permet d'extraire plus de couleur et de compenser des températures de cuvaison trop basses. Par contre, cette technique modifie l'équilibre entre les différents composés polyphénoliques. Cela donne souvent des vins plus durs et plus agressifs.

Actuellement, de nouvelles recherches s'orientent sur les voies biotechnologiques et portent notamment sur un apport d'enzymes exogènes au raisin ayant pour but de dégrader les parois cellulaires de la pellicule, ou de transformer certains précurseurs de la baie de raisin, afin de faciliter les extractions de composés polyphénoliques mais aussi d'arômes, et élaborer des vins de bonne sapidité.

Les premiers résultats obtenus montrent que cette technique est intéressante. Elle nécessite cependant une sélection appropriée des enzymes.

D'autres composés non volatils sont constitués par les précurseurs d'arômes et la partie non volatile des arômes, laquelle représente 50 à 80% de la part d'arômes.

On sait en effet que pour certains cépages, tels que les muscats, les composés de l'arôme existent sous deux formes, libre et liée. La fraction libre est constituée de substances volatiles odorantes, essentiellement des terpénols. La fraction liée renferme des précurseurs des terpénols, surtout des diglycosides non odorants.

La part d'arômes sous forme de précurseurs est le plus souvent très supérieure à la part d'arômes libres (typiquement un facteur 3 à 10) et elle peut atteindre des teneurs importantes, de l'ordre de quelques milligrammes par litre. Compte tenu, en outre, du seuil de perception olfactive particulièrement bas et de la qualité aromatique des alcools terpéniques, il y a dans ces cépages, un potentiel d'arômes inexploité qui est tout à fait intéressant.

L'ensemble est présent pour une large part dans les pellicules d'où il est difficile de l'extraire en quantité importante.

En vinification en blanc, plus de la moitié du potentiel d'arôme du raisin reste prisonnier du marc.

Pour favoriser les extractions, deux voies technologiques sont mises en oeuvre ou étudiées en vinification en blanc.

Il s'agit tout d'abord de la macération pelliculaire. Elle consiste, avant le pressurage du raisin, à laisser en contact pendant quelques heures la pellicule et le jus du raisin à une température assez basse pour éviter un départ en fermentation ou une trop forte extraction de polyphénols.

On peut également citer une autre technique qui consiste en l'hydrolyse des débris pelliculaires et des précurseurs d'arômes pour extraire les substances naturelles aromatiques. Pour cela des ajouts de préparations enzymatiques sont nécessaires.

Toutes les techniques connues, précédemment testées et utilisées, même si elles permettent d'élaborer d'excellents jus et vins, ont leur limite.

L'invention a pour objet un produit alimentaire équilibré pour l'élaboration de jus et de vins de qualités organoleptiques améliorées. Ce produit alimentaire est constitué de baies, en particulier de raisin, dont au moins certains composés non volatils, notamment les composés polyphénoliques et/ou les précurseurs d'arômes, sont présents sous forme extraite en quantités équilibrées et supérieures à environ 50 % par rapport à des baies identiques traitées par des procédés classiques.

En particulier, ce produit, après avoir été placé au contact d'une solution modèle à 15 % d'alcool en volume pendant huit jours à 25°C, comporte sous forme extraite, des composés polyphénoliques en quantité supérieure d'au moins 50 % à celle présente dans des baies identiques, foulées et placées dans une solution modèle identique pendant huit jours à 25°C, l'équilibre entre les différents composés polyphénoliques étant respecté.

Le produit est notamment destiné à l'obtention de vins rouges, la teneur en composés polyphénoliques du vin obtenu étant augmentée globalement d'au moins environ 50 %, après une vinification de huit jours, par rapport à un vin obtenu à partir de baies identiques ayant subi une vinification classique par vendange éraflée avec une cuvaison de huit jours, l'équilibre entre les différents composés polyphénoliques étant respecté.

Ce produit étant encore destiné à l'obtention de vins rouges, la teneur en composés polyphénoliques est maximale après un temps de cuvaison compris entre un et trois jours.

Le produit alimentaire selon l'invention peut également être destiné à l'obtention d'un vin blanc, à partir de baies provenant de cépages aromatiques, la teneur en composés aromatiques du vin obtenu étant supérieure à 50 % par rapport à celle d'un vin témoin obtenu par une vinification classique à partir de baies identiques.

Le produit alimentaire selon l'invention est également avantageusement utilisé pour l'obtention de jus, après pressage.

L'invention a également pour objet un procédé pour l'obtention d'un tel produit, ce procédé permettant d'extraire des composés souhaités, notamment des composés polyphénoliques et/ou des composés aromatiques dans des quantités notablement plus importantes que les procédés connus dans l'état de la technique. De plus, cette extraction respecte remarquablement bien la qualité des produits obtenus. En effet, tous les composés souhaités sont extraits dans une plus grande quantité, mais dans les mêmes proportions, l'équilibre du produit étant ainsi respecté.

Ainsi, l'invention concerne également un procédé pour l'obtention d'un produit alimentaire tel que décrit ci-dessus, à partir de baies, en particulier de raisin, consistant en la mise sous vide sensiblement immédiate des baies, provoquant une vaporisation d'une partie des baies, la pression étant comprise entre 10³ et 10⁴ Pa.

Le procédé présente également les caractéristiques suivantes prises isolément ou en combinaison :
- la mise sous vide est précédée d'un chauffage rapide des baies à une température comprise entre 25° et 100°C,
- le chauffage est effectué en une à cinq minutes, sans macération,
- le chauffage des baies est réalisé par de la vapeur condensante obtenue à partir de jus ou des condensats, provenant des baies traitées, ou de vapeur condensée émise lors de la mise sous vide,
- le chauffage est effectué en faisant circuler du jus, provenant des baies traitées, sur les baies, le jus étant régulièrement réchauffé,
- le chauffage est effectué par apport direct de calories aux baies à partir d'un échangeur approprié, en particulier d'un échangeur à surface raclée,
- le chauffage est effectué en évitant la présence d'air et ainsi d'éventuelles dégradations oxydatives,
- il comprend une étape supplémentaire selon laquelle le produit est pressé pour obtenir un jus,
- les vapeurs émises par les baies lors de l'étape de mise sous vide sont condensées,
- les vapeurs condensées sont incorporées au produit,
- les vapeurs condensées sont rejetées, les vapeurs condensées pouvant alors être traitées pour concentrer les arômes et séparer l'eau,
- il est mis en oeuvre de façon continue ou discontinue,
- les baies traitées sont entières ou ont été, au préalable, égouttées et/ou pressées et/ou éraflées.

L'invention sera mieux comprise et d'autres buts, avantages et caractéristiques de celle-ci apparaîtront plus précisément à la lecture de la description qui suit, faite en référence à la Figure unique qui représente un dispositif pour la mise en oeuvre du procédé selon l'invention.

La matière première traitée par le procédé selon l'invention est constituée par une récolte de baies entières, une récolte égouttée, une récolte ayant subi un pressurage préliminaire ou encore une récolte éraflée, égouttée ou non, pressurée ou non.

Le procédé sera par la suite plus particulièrement décrit avec des baies de raisin, et il peut être appliqué à des baies de toute nature.

Dans l'exemple illustré sur la figure unique, la vendange 1 passe tout d'abord dans un égouttoir 2, le jus d'égouttage étant récupéré dans un conduit approprié 23.

La vendange égouttée est alors amenée dans une chambre de chauffage 4. Le chauffage de la matière s'effectue à une température contrôlée précisément à l'intérieur du domaine 25°-100°C, en évitant la présence d'air qui pourrait provoquer des dégradations oxydatives.

Le chauffage de la matière dans la chambre de chauffage 4 peut être effectué par tout moyen approprié. On peut, par exemple, introduire dans la chambre 4 de la vapeur condensante biologique émise à partir de jus ou de condensats provenant du procédé. Cette vapeur est émise à partir du dispositif 5, par des conduits 6.

Les condensats et des jus d'égouttage ou d'exudation sont récupérés de la chambre de chauffage 4 et transmis, par des conduits 3 et 7 et une pompe P1, dans un échangeur 8. On peut également prévoir de transmettre du jus issu de la presse (référence 22) dans l'échangeur 8. Cette variante n'est pas illustrée sur la Figure.

De préférence, le conduit 3 est relié au conduit 26 par une vanne V3. Ainsi, lorsque les conduits 7 véhiculent des condensats et des jus en quantité suffisante, la vanne V3 est ouverte et les condensats et les jus du conduit 3 sont directement transmis dans la chambre de détente 14. Ceci permet d'obtenir un meilleur rendement énergétique dans la mesure où les condensats et les jus véhiculés par le conduit 3 sont plus froids que ceux des conduits 7. Dans le cas contraire, la vanne V3 est fermée et l'ensemble des condensats et des jus récupérés dans les conduits 3 et 7 est transmis à l'échangeur 8.

Un générateur de vapeur 9 est relié à l'échangeur 8 qui est, de préférence, un échangeur à surface qui transmet de la vapeur au dispositif 5 par des moyens appropriés 10.

Ce dispositif permet d'éviter le chauffage par une vapeur d'eau exogène provenant directement d'une chaufferie.

Le chauffage peut également être réalisé en faisant recirculer le jus sur la matière première présente dans la chambre 4, le jus étant réchauffé sur un échangeur par surface ou directement par du jus d'égouttage. Ces modes de réalisation ne sont pas illustrés sur la Figure.

On peut ainsi envisager d'utiliser tout autre système du chauffage, tel qu'un chauffage par micro-ondes, induction ou encore ultra-sons. On peut également mettre en oeuvre le procédé avec un chauffage par des méthodes classiques (échangeur à surface raclée sur raisin qui permet un apport direct de calories aux baies, échangeur tubulaire ou à plaques sur jus de raisin,...)

La durée du chauffage est réglable de telle sorte qu'il est possible de chauffer, soit la pellicule de la baie, soit la totalité de la baie, soit encore une partie périphérique de la baie. Ceci permet de contrôler le niveau d'extraction des différents composés présents dans la baie. La durée du chauffage est relativement courte.

Les baies sont chauffées à une température comprise entre 25° et 100°C, selon la nature des baies et leur utilisation. Des exemples de mises en oeuvre, adaptées à la nature des baies seront donnés plus loin.

Dans l'exemple illustré sur la Figure, la matière est transférée depuis l'entrée 11 de la chambre de chauffage 4 jusqu'à la sortie 12, par l'intermédiaire de vis, portant des auges perforées qui sont destinées à recevoir une quantité déterminée de matière. Les vis tournent autour d'un axe 13. La vitesse de rotation, la hauteur de couche réglable, la longueur des vis ainsi que la largeur de la chambre de chauffage, définissent le débit et le temps de séjour des produits chauffés.

La matière chauffée est transférée depuis la sortie 12 de la chambre de chauffage 4 jusqu'à une chambre de détente 14 par l'intermédiaire d'un conduit 15. Celui-ci est équipé d'un sas 16, de préférence sensiblement étanche, de façon à éviter des fuites de vapeur.

La chambre de détente 14 est reliée par des moyens appropriés 17, à un condenseur 18 qui est lui-même relié à un dispositif de vide 19.

La matière préchauffée est mise sous vide sensiblement immédiatement. La pression à l'intérieur de la chambre de détente 14 est comprise entre 10³ et 10⁴ Pa. La valeur de la pression est choisie en fonction de la nature des baies et de leur utilisation. Elle est liée à la valeur de température choisie. Des exemples seront donnés dans la suite de la description.

Le vide dans la chambre 14 se fait par condensation des vapeurs émises à travers le condensateur 18.

Cette mise sous vide très rapide provoque une auto-évaporation des fractions liquides de la matière qui destructure la matière préalablement chauffée, et notamment la pellicule des baies. Ceci permet d'augmenter la mise en solution de différents composés et notamment les composés polyphénoliques, les précurseurs d'arôme ou encore autres extraits solubles organiques tels que les polysaccharides.

L'effet de cette mise sous vide sera revu plus en détail au regard des résultats d'analyse donnés dans la suite de la description.

Cet effet est d'autant plus important que la différence entre la température de chauffage des baies et celle provoquée par la mise sous vide est également importante. Cependant, lorsque l'on souhaite obtenir des vins blancs, il convient de ne pas chauffer très fortement les baies (inférieur à 50°C) et on choisira alors d'appliquer un vide important dans la chambre de détente (d'environ 2 10³ Pa). On peut également choisir de ne pas chauffer du tout les baies. Lorsque l'on souhaite obtenir des vins rouges, on peut chauffer plus fortement les baies. Ainsi, les baies sont chauffées très rapidement (en 1 à 5 minutes) sans macération à chaud, jusqu'à une valeur maximale de 100°C et préférentiellement comprise entre 60° et 80°C. Le vide dans la chambre de détente peut être moins important (d'environ 10⁴ Pa) . Il apparaît cependant avantageux d'utiliser un vide relativement important (d'environ 5 10³ Pa). La différence entre la température de chauffage et celle provoquée par la mise sous vide est alors augmentée ainsi que l'effet de la mise sous vide.

La matière traitée qui constitue le produit selon l'invention est ensuite évacuée de la chambre de détente 14 par des moyens appropriés 20.

Il faut noter que le produit sort de la chambre de détente 14 à une température relativement basse, de l'ordre de 20° à 25°, lorsque le vide présent dans cette chambre est très poussé (de l'ordre de 2 10³ Pa) et que les baies ont été chauffées à une température appropriée.

On peut laisser le produit diffuser.

Le produit peut également être pressé dans le dispositif 21, de façon à obtenir un jus qui s'écoule par le conduit 22. On peut y adjoindre le jus provenant du dispositif d'égouttage 2, par l'intermédiaire du conduit 23.

On récupère le produit pressé en 24.

Si l'on souhaite uniquement obtenir un jus à partir du produit, on récupère l'ensemble du jus obtenu par le procédé et issu de l'égouttage, en 25.

Si l'on souhaite obtenir un vin, on procède à la fermentation du produit provenant de la chambre de détente 14, éventuellement avec le jus d'égouttage. On peut également procéder à la fermentation, après passage du produit dans le dispositif 21. Dans ce cas, on fait fermenter le jus obtenu en 25 avec le produit pressé obtenu en 24.

On peut encore noter que le jus obtenu en sortie de l'échangeur 8 est transféré vers la chambre de détente 14, par l'intermédiaire du conduit 26 et de la pompe P2.

La vapeur émise lors de la mise sous vide est récupérée, en sortie du condenseur 18, sous la forme de condensats aromatiques. Ceux-ci sont soit transférés du condenseur 18 vers la chambre de détente 14, la vanne V1 étant alors ouverte et la vanne V2 fermée. Ceci permet de restituer un produit d'un poids identique à celui de la matière première. On peut également prévoir de transférer les condensats présents dans le condenseur 18 vers l'extérieur du dispositif, par l'intermédiaire de la pompe P3. Dans ce cas, la vanne V1 est fermée et la vanne V2 est ouverte. Cette variante du procédé permet de réaliser une préconcentration maîtrisable du produit et ainsi d'augmenter le degré d'alcool du vin obtenu à partir du produit obtenu par le procédé de l'invention.

Dans cette variante, les condensats aromatiques peuvent être traités pour concentrer les arômes et séparer l'eau.

Lorsque le procédé selon l'invention est mis en oeuvre avec le dispositif représenté sur la figure unique, la matière première est traitée de façon continue. On peut également envisager de mettre en oeuvre le procédé de façon discontinue. Ceci est particulièrement intéressant lorsque la quantité de baies à traiter est relativement faible. Dans ce cas, l'ensemble de la matière est placé dans une enceinte dans laquelle elle est préalablement chauffée à une température comprise entre 25° et 100°C. Ce chauffage est suivi d'une mise sous vide rapide. La valeur du vide est également réglable par l'intermédiaire d'un condenseur et d'un dispositif de vide, entre les valeurs de 10³ Pa et 10⁴ Pa.

La mise sous vide provoque également une auto-évaporation de la matière.

L'enceinte est vidée de façon à récupérer l'ensemble de la matière traitée qui constitue le produit selon l'invention.

Ainsi, le procédé mis en oeuvre de façon discontinue diffère du procédé continu essentiellement en ce que toute la matière première est placée dans une enceinte qui sert à la fois de chambre de chauffage et de chambre de détente. C'est donc l'ensemble de la matière première qui est placé dans l'enceinte et qui est ensuite récupéré, à l'issu du traitement.

Pour le reste, le procédé est mis en oeuvre de façon similaire, tant en ce qui concerne le chauffage, la récupération des condensats obtenus sous vide ou encore un éventuel pressage de la matière à sa sortie de l'enceinte.

Le procédé mis en oeuvre de façon discontinue ne sera donc pas décrit plus en détail.

Le procédé qui vient d'être décrit permet d'extraire plus de composés polyphénoliques, de précurseurs d'arômes, de composés aromatiques et d'extraits secs hors sucre que les procédés connus, ceci sans augmentation de la proportion de polymères oxydés.

Les résultats obtenus pour des jus issus du pressurage de produits selon l'invention, sont illustrés par le tableau I.

**TABLEAU I**

| | Raisin foulé sur solution modèle | Produit selon l'invention sur solution modèle |
|---|---|---|
| Polyphénols adsorbance 280nm | 52 | 87 |
| anthocyanes | 580 | 940 |

Le procédé a été mis en oeuvre sur un cépage donné (Carignan) dans les conditions suivantes. Le raisin a été chauffé à une température de 90°C en trois minutes. Ce chauffage a été suivi, en continu, d'une détente à 5 10³ Pa. Le produit obtenu a immédiatement mis au contact d'une solution modélisée d'éthanol pour amener la teneur en alcool du produit à 15 % en volume, par ajout d'alcool à 96 % en volume. La durée de ce contact a été de huit jours à 25°C. Un pressurage et une désalcoolisation ont ensuite permis d'éliminer l'alcool et de revenir à l'état de jus pour procéder aux analyses.

Les raisins issus du même lot de vendange ont comparativement été foulés, mis au contact de la même solution modélisée selon le même protocole. Après pressurage et désalcoolisation, les mêmes analyses ont été effectuées.

Le tableau I donne les valeurs comparées obtenues en ce qui concerne l'adsorbance -280 nm, représentative de la teneur globale en polyphénols, et la teneur en anthocyanes.

On constate que le produit selon l'invention, lorsqu'il est placé au contact de la solution modèle, permet d'obtenir, par rapport aux raisins simplement foulés placés dans la même solution modèle, une augmentation :
- de la teneur en polyphénols de près de 70 %,
- de la teneur en anthocyanes de 60 %.

Il faut noter que la référence choisie est ici celle d'une solution modélisée au contact de laquelle le raisin éraflé et foulé, est mis en contact. Il faut noter que lorsqu'on utilise un procédé industriel classique, les résultats obtenus sont globalement au mieux, ceux obtenus avec cette solution modélisée. On peut donc en déduire que, dans le produit selon l'invention, la teneur en composés polyphénoliques, sous forme extraite, est supérieure de plus de 50 %, par rapport à des baies identiques traitées par des procédés classiques.

Les résultats obtenus par la vinification de produits selon l'invention sont notamment montrés par les annexes I et II, jointes à la description (voir fin de description). Les résultats concernent des baies destinées à l'obtention de vins rouges, pour lesquels on souhaite améliorer l'extraction des composés polyphénoliques.

Le procédé a été mis en oeuvre sur trois cépages différents (Carignan, Syrah et Merlot) dans les conditions suivantes. Le raisin a été chauffé à une température de 90°C en trois minutes. Ce chauffage a été suivi d'une détente à 8 10³ Pa. Le produit obtenu a ensuite subi une vinification de huit jours.

Le procédé a été mis en oeuvre sans réintroduire les condensats aromatiques extraits lors de la mise sous vide de la matière chauffée. Ceci explique la légère augmentation du degré alcoolique.

La vinification de produits selon l'invention est comparée à une technologie de référence, dénommée "vinification classique". Cette vinification a été effectuée par vendange éraflée, avec une cuvaison de huit jours, à partir de baies identiques, et avec un remontage par jour.

Toutes les autres conditions de mise en oeuvre de la vinification du produit selon l'invention et de la vinification classique sont identiques.

Les résultats figurant en annexes I et II montrent que les extractions obtenues sur ces cépages sont d'un niveau qui n'a jamais été atteint avec les techniques classiquement mises en oeuvre.

On peut notamment citer une augmentation importante de l'extrait sec non sucré du vin. Cette augmentation peut atteindre plus de 40 % sur les vins de cépage Carignan.

Egalement avec ce cépage, l'intensité colorante est trois fois plus importante qu'avec une vinification classique.

Ainsi, les résultats sont intéressants quantitativement, par rapport à une vinification classique :
- la teneur en anthocyanes totales augmente entre 39 et 233 % selon les cépages,
- la teneur en procyanidines augmente entre 47 et 132 %, selon les cépages et
- la teneur globale en tanins (Folin Ciocalteu) augmente entre 35 et 127 % selon les cépages.

Les résultats sont également intéressants qualitativement. En effet, tous les équilibres entre les groupes de polyphénols sont respectés. Ces équilibres sont quantifiés par les indices et rapports relatifs à la composition en anthocyanes et tanins.

On se réfère tout d'abord à la composition en tanins. L'indice des "tanins précipités par HCl" évalue la quantité de composés phénoliques qui sont précipités en milieu HCl concentré. Les composés les plus polymérisés précipitent.

Un taux élevé de cet indice est signe d'un vieillissement et d'une oxydation du vin. Pour les vins jeunes, le taux varie de 10 à 30 %.

Pour les cépages qui font l'objet des annexes I et II, on constate que les composés polymérisés ne se forment pas en proportion excessive. Ceci est particulièrement vrai pour les cépages Carignan et Merlot.

L'indice des "Tanins précipités par gélatine" représente le pourcentage des tanins précipités par un excès de gélatine. Cet indice est donc le reflet de l'astringence des vins. Plus cet indice est faible, moins le vins est astringent. Cet indice varie selon les cépages.

On constate que pour les trois cépages étudiés, cet indice ne varie pratiquement pas.

Les tanins extraits qui sont présents dans le produit selon l'invention ne sont donc pas des tanins durs et astringents. De ce point de vue, le procédé selon l'invention est plus favorable qu'une macération finale à chaud ou un pressage très poussé du marc, ces deux techniques conduisant à une augmentation sensible des tanins durs et astringents.

Les dégustations comparatives qui ont pu être effectuées entre les deux vins élaborés à partir de chaque cépage, confirment ces observations.

L'indice des "Tanins précipités par éthanol" représente le pourcentage des tanins précipités par un excès d'éthanol. Ces tanins sont ceux qui sont associés à des sels minéraux et des polysaccharides.

On estime que ces tanins seraient responsables du gras et du charnu des vins.

En ce qui concerne cet indice, on constate encore que l'équilibre des tanins est préservé.

Ceci est également vrai en ce qui concerne le rapport non polymères-polymères.

La composition en anthocyanes est également quantifiée par plusieurs indices.

L'indice de chauffage mesure la proportion des pigments qui n'ont pas été détruits par le chauffage du vin, lors de la mesure. Cet indice est donc en rapport direct avec la stabilité de la matière colorante. Il permet de reconnaître les vins dont la couleur se conservera le mieux pendant le vieillissement du vin.

Pour les trois cépages étudiés, il apparaît que la stabilité de la matière colorante sera au moins aussi bonne que pour un vin obtenu par une vinification classique. La quantité d'anthocyanes totales étant beaucoup plus importante pour un vin obtenu par le nouveau procédé que par un vin obtenu par une vinification classique, on peut affirmer que les vins élaborés à partir d'un produit obtenu par le procédé de l'invention seront plus colorés, quel que soit leur état de vieillissement. Des analyses effectuées après un an de conservation des vins confirment les interprétations. Les variations de composition au cours du temps sont faibles.

L'indice des pigments polymérisés représente le pourcentage de pigments non décolorables par un excès d'anhybride sulfureux.

La valeur élevée de cet indice confirme l'excellente stabilité de la matière colorante extraite.

De plus, la teneur élevée des vins élaborés à partir d'une matière première ayant subi le procédé selon l'invention, en anthocyanes libres, colorées et combinées aux tanins confirme encore la qualité de cette couleur et sa stabilité.

L'indice PVP représente le pourcentage des anthocyanes combinées aux tanins, par rapport aux anthocyanes totales.

En cuvaison classique, cet indice est d'autant plus élevé que le contact entre la phase solide et la phase liquide est long. Sur des vins de presse, cet indice augmente fortement.

On constate que cet indice reste sensiblement stable.

Les résultats obtenus sont très cohérents. Le procédé selon l'invention permet d'obtenir un produit destiné à l'élaboration de jus ou de vins, dans lequel les composés non volatils sont extraits dans des proportions très importantes. Ce produit est destiné à l'élaboration de jus et de vins dans lesquels les composés polyphénoliques sont présents, en de plus grandes quantités.

Ces composés sont stables, contrairement à ceux présents dans les vins obtenus par le chauffage de vendange. Ce sont les composés polyphénoliques présents dans la pellicule qui sont extraits en plus grande quantité et non ceux qui sont astringents et polymérisés, et qui sont particulièrement présents dans les pépins.

De plus, l'équilibre entre tous les composés polyphénoliques est remarquablement respecté. Ainsi, la qualité des vins obtenue restera représentative de la qualité des raisins mis en oeuvre.

On peut également noter que la vinification peut être effectuée dans des cuves simplifiées par rapport à celles qui sont aujourd'hui utilisées. En effet, ces cuves sont conçues pour assurer un bon renouvellement des liquides sur les solides et ainsi favoriser l'extraction des composés polyphénoliques. Dans la mesure où le produit selon l'invention présente déjà, sous forme extraite, des composés polyphénoliques dans des quantités très importantes, la vinification peut être effectuée de façon plus simple.

Les essais ont aussi montré que lorsque le produit selon l'invention est destiné à l'obtention d'un vin rouge, la teneur en composés polyphénoliques du vin obtenu atteint sa valeur maximale après un temps de cuvaison très court. Celui-ci est compris entre un et trois jours. Ainsi, les durées de cuvaison, lorsqu'on utilise les produits selon l'invention, sont essentiellement dépendantes de la durée de fermentation des sucres, cette fermentation s'effectue généralement entre cinq et six jours de cuvaison. Le produit selon l'invention pourra donc permettre de raccourcir de façon importante le temps d'occupation des cuves de vinification, pour en augmenter la rotation.

De plus, la fermentation peut être effectuée en phase solide ou encore en phase liquide, laquelle est plus facile à maîtriser.

En ce qui concerne maintenant les composés aromatiques, comme cela a été souligné plus haut, le potentiel aromatique d'une baie, et en particulier de la baie de raisin, est formé de substances odorantes et volatiles et de précurseurs non odorants.

Le procédé selon l'invention permet d'obtenir un produit pour l'élaboration de jus ou de vins pour lequel les précurseurs d'arômes non volatils sont présents en grande quantité. Ce produit sera plus particulièrement destinés à l'élaboration de vins blancs.

Le procédé selon l'invention fragilise les cellules de la pellicule de raisin et permet ainsi d'extraire par simple pressurage les précurseurs d'arômes non volatils.

Le procédé selon l'invention a été notamment appliqué à des raisins de type muscat, comme le muscat d'Alexandrie.

Il s'agit d'un cépage aromatique dont les composés qui amènent la tycipité variétale, appartiennent à la famille des terpénols. Une part importante et majoritaire de ces terpénols existe dans la baie de raisin sous forme liée : il s'agit des glycosides et notamment des diglycolides non odorants.

Les résultats obtenus figurent en annexe III (voir fin de description).

Le vin témoin est obtenu à partir d'un pressurage direct du raisin, suivi d'une fermentation du jus issu du pressurage. Des baies identiques ont été utilisées pour obtenir un vin à partir de produits selon l'invention.

Les baies ont subi le procédé selon l'invention, avec un chauffage à 70°C en trois minutes suivi d'une mise sous vide à 8 10³ Pa. Le jus a ensuite immédiatement été extrait par pressurage. La fermentation a été conduite en phase liquide.

Le procédé a été mis en oeuvre sans réintroduire les condensats aromatiques extraits lors de la mise sous vide des baies de raisin. Il en résulte un degré d'alcool plus élevé (plus 1 % en volume) pour le vin obtenu à partir du produit selon l'invention.

A l'analyse des vins comme à la dégustation, il apparaît une différence tout à fait significative entre les deux vins. Le vin obtenu à partir du procédé selon l'invention est beaucoup plus aromatique.

Sa teneur globale en terpénols passe de 4 930 à 8 480 µm/l. Il s'agit là d'un enrichissement très important qu'aucun procédé classique ne peut permettre d'obtenir.

Par contre les autres composés volatils de ces deux vins et en particulier ceux de type fermentaire (alcools autres que l'éthanol et les esters) sont présents en quantité relativement proches.

Ces résultats mettent en évidence que le produit selon l'invention et le procédé pour son obtention permettent d'augmenter de façon très sensible la teneur en composés aromatiques, ce qui est très intéressant sur des raisins aromatiques, du type muscat. Cet enrichissement aromatique est de plus, indépendant des extractions de composés volatils, liés à l'évaporation, puisque les condensats aromatiques n'ont pas été réintroduits dans le jus de raisin.

L'ensemble des résultats obtenus met en évidence l'intérêt du produit selon l'invention, destiné à l'élaboration de jus ou de vins, à partir de baies, ainsi que celui du procédé permettant l'obtention d'un tel produit. Ce procédé crée les conditions d'une extraction importante de nombreux composés non volatils, notamment les composés polyphénoliques et aromatiques. Ces derniers sont extraits sous leur forme liée, non volatile et non odorante. Ils sont ensuite hydrolysés et deviennent alors très odorants dans le produit au cours de son élevage ou de sa conservation. Cette extraction est immédiate, dans le cas des jus et des vins blancs, issus de pressage direct. Cette extraction est encore accrue de façon importante, après vinification sur marc dans le cas des vins rouges.

Les vins élaborés à partir des produits selon l'invention sont très expressifs et correspondent mieux au potentiel aromatique naturel de la matière première.

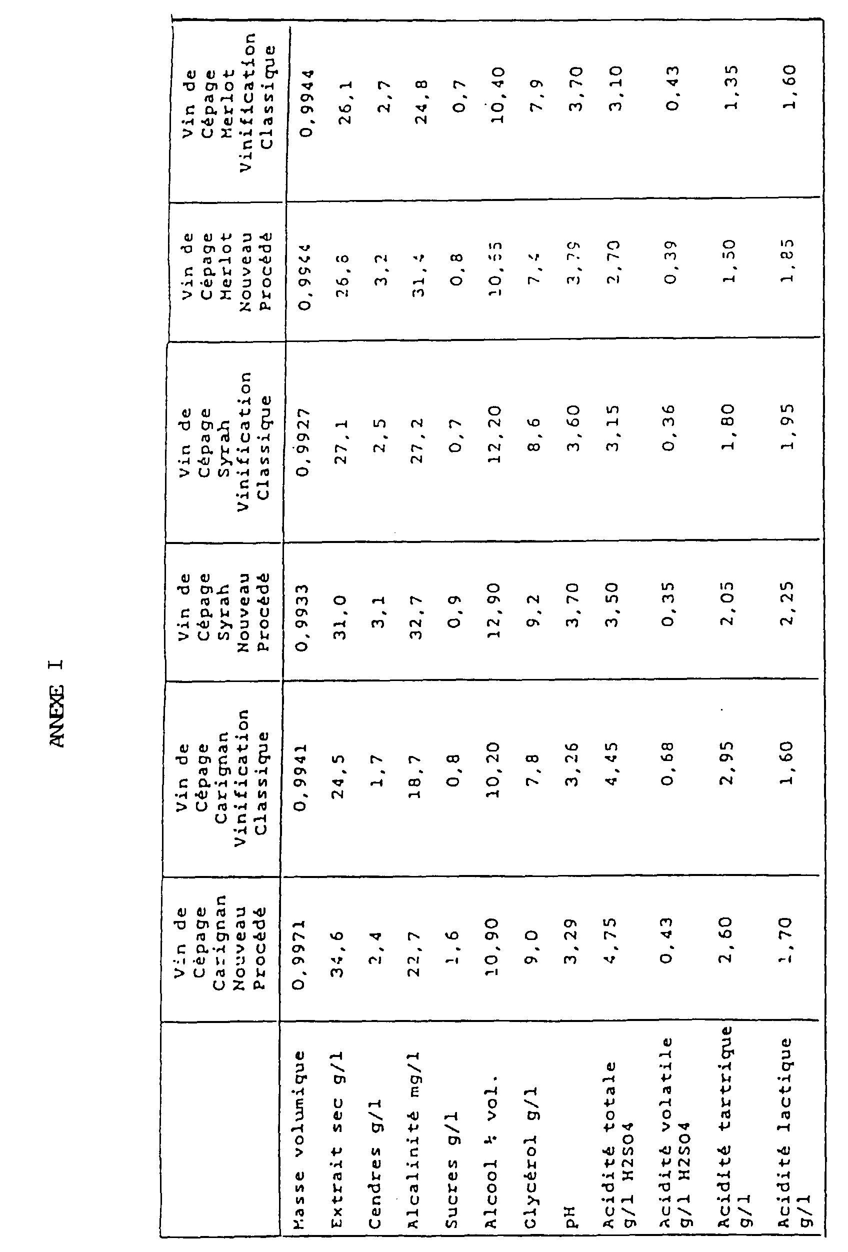

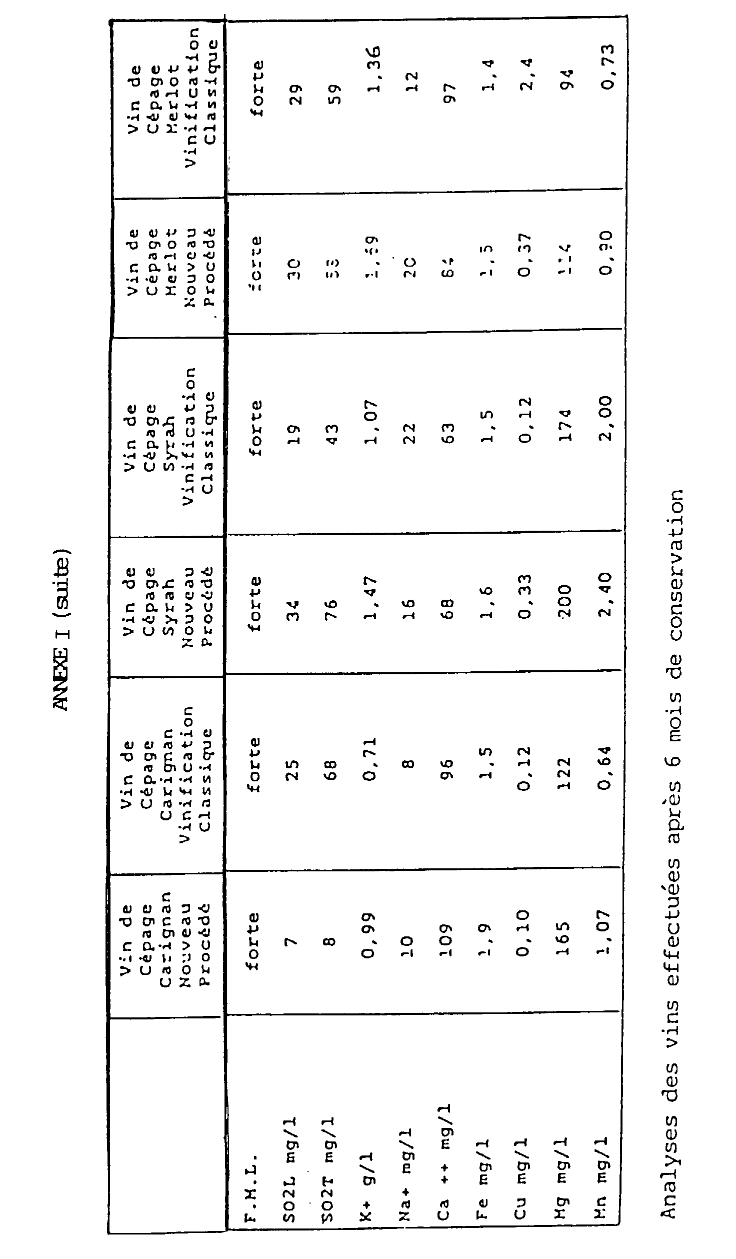

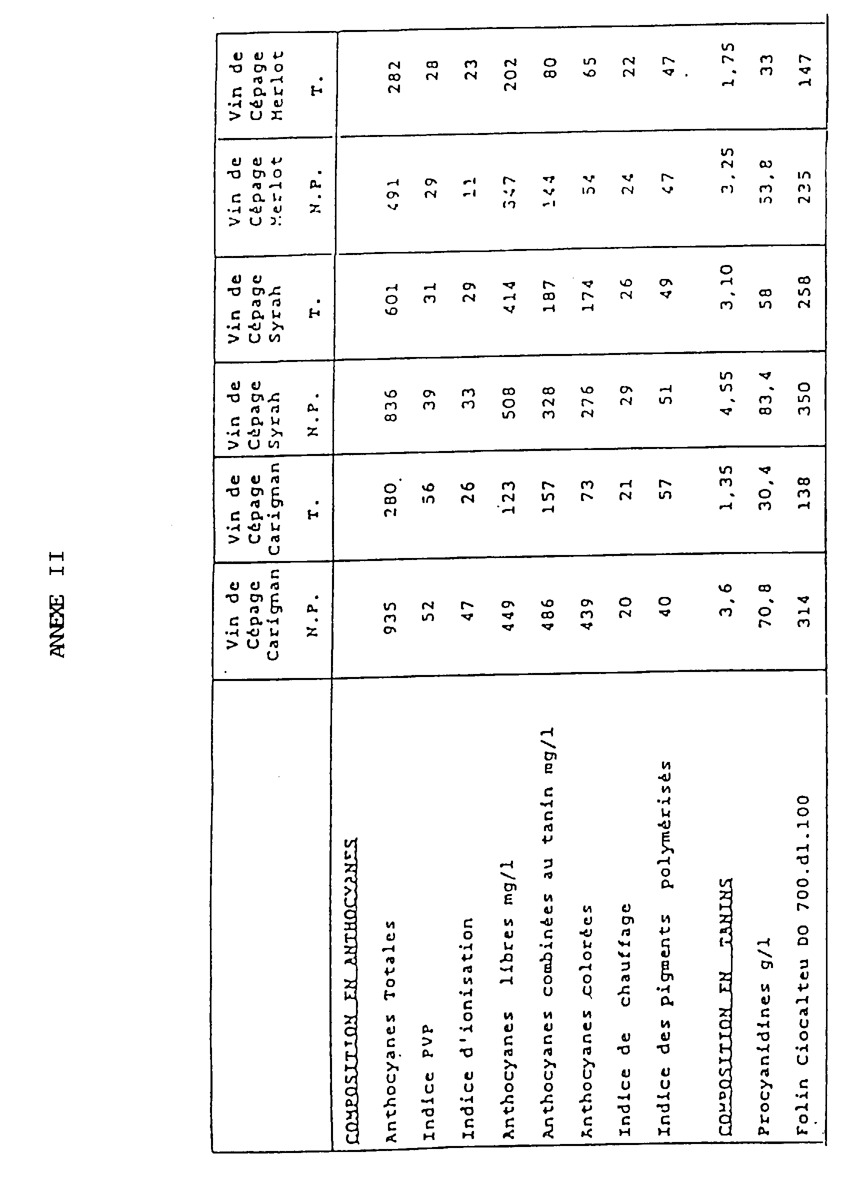

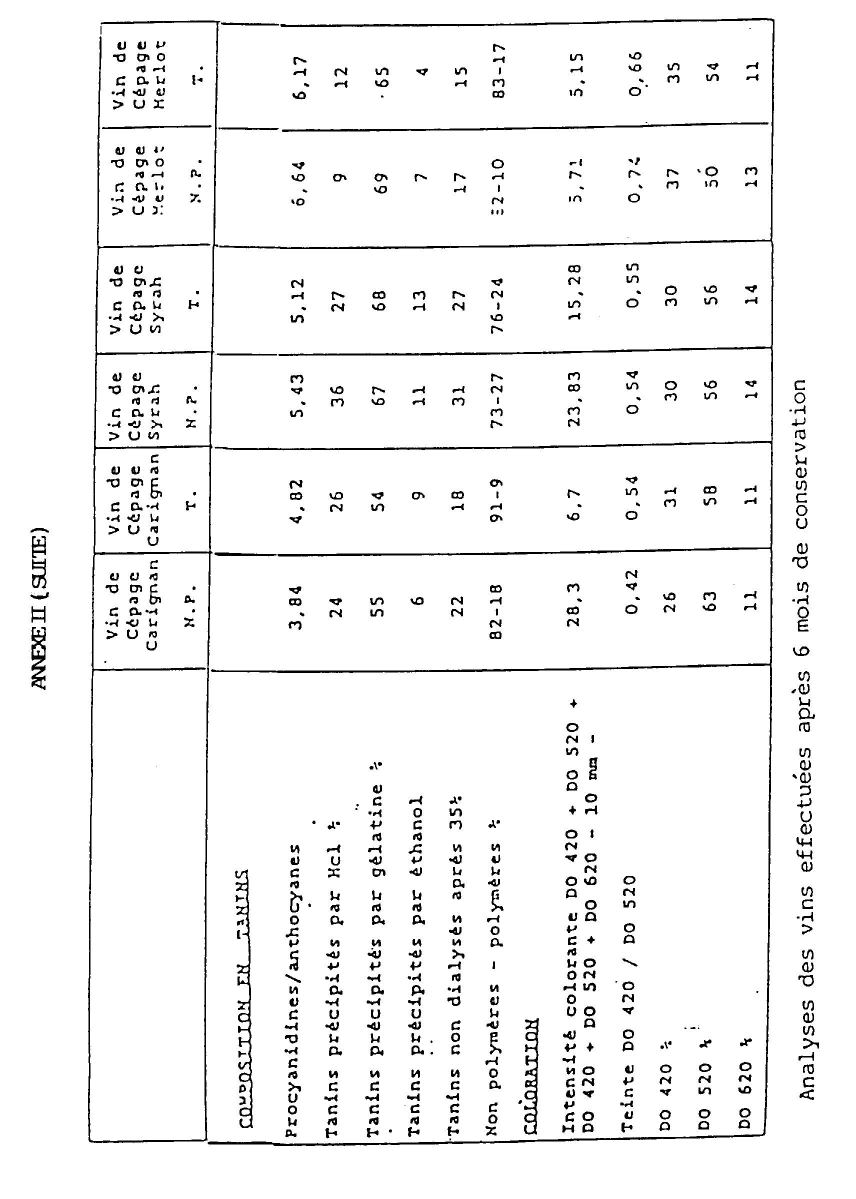

### ANNEXE III

| RESULTATS OBTENUS SUR VINS BLANC CEPAGE MUSCAT D'ALEXANDRIE | | |
|---|---|---|
| | Vin témoin Pressurage direct | Vin obtenu à partir du produit selon l'invention |
| Alcool % vol | 14,35 | 15,35 |
| pH | 3,90 | 4,13 |
| Sucre g/l | 0,9 | 0,7 |
| A.totale g/l | 2,65 | 2,35 |
| A.volatile g/l | 0,71 | 0,44 |
| A.tartrique g/l | 1,1 | 1,1 |
| SO₂ mg/l | <10 | <10 |
| N⁺ | 1,0 | 1,6 |
| DO₄₂₀ (1 cm) | 0,25 | 0,42 |
| DO₂₈₀ | 7,6 | 12,9 |
| Composés volatils terpénols µg/l | 4 930 | 8 480 |
| Géraniol | 342 | 973 |
| Linalol | 698 | 1 690 |
| Acide génanique | 338 | 723 |
| Esters µg/l | 4 147 | 3 360 |
| Alcools µg/l (autres que l' l'éthanol) | 67 206 | 73 532 |

## Revendications

1. Produit alimentaire pour l'obtention de jus ou de vins, constitué de baies, en particulier de raisin, dont au moins un composé non volatil, parmi les composés polyphénoliques et les précurseurs d'arômes, est présent sous forme extraite en quantité équilibrée et supérieure à environ 50 % par rapport à des baies identiques ayant subi un foulage.

2. Produit selon la revendication 1 caractérisé en ce qu'après avoir été placé au contact d'une solution modèle à 15 % d'alcool en volume pendant huit jours à 25°C, il présente sous forme extraite, des composés polyphénoliques en quantité supérieure d'au moins 50 % à celle présente dans des baies identiques, foulées et placées dans une solution modèle identique pendant huit jours à 25°C, l'équilibre entre les différents composés polyphénoliques étant respecté.

3. Vin rouge obtenu par vinification du produit selon l'une des revendications 1 ou 2 constitué de baies de raisin, la teneur en composés polyphénoliques dudit vin étant globalement supérieure d'au moins environ 50 % après une vinification de huit jours, par rapport à un vin obtenu à partir de baies identiques ayant subi une vinification de référence, par vendange éraflée avec une cuvaison de huit jours, l'équilibre entre les différents composés polyphénoliques étant respecté.

4. Vin rouge obtenu par vinification du produit selon l'une des revendications 1 ou 2, constitué de baies de raisin, la teneur en composés polyphénoliques étant maximale après un temps de cuvaison compris entre un et trois jours.

5. Vin blanc obtenu par vinification du produit selon la revendication 1 constitué de baies de raisin provenant de cépages aromatiques, la teneur en composés aromatiques dudit vin étant supérieure à 50 % par rapport à celle d'un vin témoin obtenu par pressurage de baies identiques, suivi d'une fermentation du jus issu du pressurage.

6. Jus obtenu par pressage du produit selon la revendication 1.

7. Procédé d'obtention d'un produit selon l'une des revendications 1 ou 2 à partir de baies, en particulier de raisin, consistant en la mise sous vide sensiblement immédiate des baies, provoquant une vaporisation d'une partie des baies, la pression étant comprise entre 10³ et 10⁴ Pa.

8. Procédé selon la revendication 7 caractérisé en ce que la mise sous vide est précédée d'un chauffage rapide des baies à une température comprise entre 25° et 100°C.

9. Procédé selon la revendication 8 caractérisé en ce que le chauffage est effectué en une à cinq minutes, sans macération.

10. Procédé selon l'une des revendications 8 ou 9, caractérisé en ce que le chauffage des baies est réalisé par de la vapeur condensante obtenue à partir de jus ou de condensats, provenant des baies traitées, ou de vapeur condensée émise lors de la mise sous vide.

11. Procédé selon l'une des revendications 8 ou 9 caractérisé en ce que le chauffage est effectué en faisant circuler du jus, provenant des baies traitées, sur les baies, le jus étant régulièrement réchauffé.

12. Procédé selon l'une des revendications 8 ou 9 caractérisé en ce que le chauffage est effectué par apport direct de calories aux baies à partir d'un échangeur approprié, en particulier d'un échangeur à surface raclée.

13. Procédé selon l'une des revendications 8 à 12 caractérisé en ce que le chauffage est effectué en évitant la présence d'air et ainsi d'éventuelles dégradations oxydatives.

14. Procédé selon l'une des revendications 7 à 13 caractérisé en ce que les vapeurs émises par les baies lors de l'étape de mise sous vide sont condensées.

15. Procédé selon la revendication 14 caractérisé en ce que les vapeurs condensées sont incorporées au produit selon l'une des revendications 1 ou 2.

16. Procédé selon la revendication 14 caractérisé en ce que les vapeurs condensées sont rejetées.

17. Procédé selon la revendication 16 caractérisé en ce que les vapeurs condensées sont traitées pour concentrer les arômes et séparer l'eau.

18. Procédé selon l'une des revendications 7 à 17 caractérisé en qu'il est mis en oeuvre de façon continue ou discontinue.

19. Procédé selon l'une des revendications 7 à 18 caractérisé en ce que les baies traitées sont entières ou ont été, au préalable, égouttées et/ou pressées et/ou éraflées.

## Claims

1. An alimentary product for obtaining juices or wines, constituted of berries, in particular grapes, in which at least one non-volatile compound, among the polyphenolic compounds and the precursors of aromas, are present under extract form in a balanced quantity and more than about 50 % compared with crushed identical berries.

2. Product according to claim 1, characterized in that, after being placed in contact with a model solution at 15 % alcohol by volume for eight days at 25° C, it presents under extract form polyphenolic compounds in a quantity more than at least 50 % to that present in identical berries, crushed and placed in an identical model solution for eight days at 25°C, the balance between the different polyphenolic compounds being respected.

3. Red wine obtained by vinification of the product according to one of claims 1 or 2, constituted of grape berries, the level of polyphenolic compounds of the said wine being increased globally by at least 50 % after a vinification of eight days, compared with a wine obtained from identical berries which have been submitted to a classical vinification with a harvest of destemmed grapes with vat fermentation of eight days, the balance between the different polyphenolic compounds being respected.

4. Red wine obtained by vinification of the product according to one of claims 1 or 2, constituted of grape berries, the level of polyphenolic compounds being maximal after a vat fermentation time of between one and three days.

5. White wine obtained by vinification of the product according to claim 1, constituted of grape berries originating from aromatic varieties of vine-plants, the level of aromatic compounds of the said wine being higher by 50 % compared with that of a reference wine obtained by pressing identical berries, followed by fermentation of the juice resulting from pressing.

6. Juice obtained by pressing the product according to claim 1.

7. Method of obtaining a product according to one of claims 1 or 2 starting from berries, in particular the grape, comprising the step of putting the berries almost immediately under vacuum, giving a vaporization of a part of the berries, the pressure being between 10³ and 10⁴ Pa.

8. Mcthod according to claim 7, characterized in that the putting under vacuum is prcceded by a rapid heating of the berries to a temperature between 25° and 100°C.

9. Method according to claim 8, characterized in that the heating is carried out in one to five minutes, without maceration.

10. Method according to one of claims 8 or 9, characterized in that the heating of the berries is carried out by the condensing vapour obtained from the juice or condensates originating from the treated berries, or condensed vapour emitted during thc creation of the vacuum.

11. Method according to one of claims 8 or 9, characterized in that the heating is carried out by circulating the juice originating from the treated berries, over the berries, the juice being regularly reheated.

12. Method according to one of claims 8 or 9, characterized in that the heating is carried out by direct input of calories to the berries from an appropriate exchanger, in particular an exchanger with a raked surface.

13. Method according to one of claims 8 to 12, characterized in that the heating is carried out avoiding the presence of air and thus possible oxidizing degradations.

14. Method as claimed in any of the claims 7 to 13, characterized in that the vapours emitted by the berries at the stage of being put under a vacuum are condensed.

15. Method according to claim 14, characterized in that the condensed vapours are incorporated in the product according to one of claims 1 or 2.

16. Method according to claim 14, characterized in that the condensed vapours are rejected.

17. Method according to claim 16, characterized in that the condensed vapours are treated to concentrate the aromas and separate the water.

18. Method according to one of claims 7 to 17, characterized in that it is carried out in a continuous or discontinuous fashion.

19. Method according to one of claims 7 to 18, characterized in that the berries trcated are whole or have previously been dripped and/or pressed and/or destemmed.

## Patentansprüche

1. Nahrungsmittelprodukt für die Gewinnung von Säften oder Weinen, das aus Beeren, insbesondere aus Weintrauben besteht, von deren nichtflüchtigen Verbindungen wenigstens eine aus der Gruppe der Polyphenolverbindungen und der Aromavorstufen in extrahierter Form in einer ausgewogenen Menge vorliegt, die um ungefähr 50% größer ist als bei identischen Beeren, die gekeltert bzw. zerquetscht wurden.

2. Produkt gemäß Anspruch 1, dadurch gekennzeichnet, daß es nach achttägigem Kontakt mit einer Modellösung mit 15 Vol.-% Alkohol bei 25°C in extrahierter Form Polyphenolverbindungen in einer Menge aufweist, die um wenigstens 50% größer ist als in identischen Beeren, die gekeltert und acht Tage lang bei 25°C in eine identische Modellösung gelegt wurden, wobei die Ausgewogenheit zwischen den verschiedenen Polyphenolverbindungen bewahrt wird.

3. Rotwein, der durch Verarbeitung des Produkts gemäß einem der Ansprüche 1 oder 2, das aus Weintrauben besteht, zu Wein erhalten wurde, wobei der Gehalt des Weines an Polyphenolverbindungen insgesamt nach einer achttägigen Weinbereitung um wenigstens ungefähr 50% größer ist als bei einem Wein, der aus identischen Beeren erhalten wurde, die einer vergleichbaren Verarbeitung zu Wein durch aufkratzende Weinlese mit achttägiger Gärung unterzogen wurden, wobei die Ausgewogenheit zwischen den verschiedenen Polyphenolverbindungen bewahrt wird.

4. Rotwein, der durch Verarbeitung des Produkts gemäß einem der Ansprüche 1 oder 2, das aus Weintrauben besteht, zu Wein erhalten wurde, wobei der Gehalt an Polyphenolverbindungen nach einer Gärungszeit von einem bis drei Tagen maximal ist.

5. Weißwein, der durch Verarbeitung des Produkts gemäß Anspruch 1, das aus Weintrauben besteht, die von aromatischen Rebsorten stammen, zu Wein erhalten wurde, wobei der Gehalt des Weines an aromatischen Verbindungen um 50% größer ist als bei einem Vergleichswein, der durch Keltern identischer Beeren und anschließende Gärung des beim Keltern gewonnenen Saftes erhalten wurde.

6. Saft, der durch Pressen des Produkts gemäß Anspruch 1 erhalten wurde.

7. Verfahren zur Gewinnung eines Produkts gemäß einem der Ansprüche 1 oder 2 aus Beeren, insbesondere aus Weintrauben, das den Schritt aufweist, die Beeren im wesentlichen sofort in ein Vakuum einzubringen, so daß eine Verdampfung eines Teils dcr Beeren erfolgt, wobei der Druck 10³ bis 10⁴ Pa beträgt.

8. Verfahren gemäß Anspruch 7, dadurch gekennzeichnet, daß vor dem Einbringen in ein Vakuum ein rasches Erhitzen der Beeren auf eine Temperatur zwischen 25°C und 100°C erfolgt.

9. Verfahren gemäß Anspruch 8, dadurch gekennzeichnet, daß das Erhitzen innerhalb von einer bis fünf Minuten ohne Mazeration erfolgt.

10. Verfahren gemäß einem der Ansprüche 8 oder 9, dadurch gekennzeichnet, daß das Erhitzen der Beeren durch kondensierenden Dampf erreicht wird, der aus Saft oder Kondensaten, die von behandelten Beeren stammen, oder aus kondensiertem Dampf, der beim Einbringen in ein Vakuum freigesetzt wurde, erhalten wird.

11. Verfahren gemäß einem der Ansprüche 8 oder 9, dadurch gekennzeichnet, daß das Erhitzen dadurch erfolgt, daß man Saft, der von behandelten Beeren stammt, im Kreislauf auf die Beeren zurückführt, wobei der Saft regelmäßig wieder erhitzt wird.

12. Verfahren gemäß einem der Ansprüche 8 oder 9, dadurch gekennzeichnet, daß das Erhitzen durch direktes Heranführen von Wärme von einem geeigneten Wärmetauscher, insbesondere einem Wärmetauscher mit glattgestrichener Oberfläche, zu den Beeren erfolgt.

13. Verfahren gemäß einem der Ansprüche 8 bis 12, dadurch gekennzeichnet, daß man beim Erhitzen die Gegenwart von Luft und damit eventuelle oxidative Zersetzungen vermeidet.

14. Verfahren gemäß einem der Ansprüche 7 bis 13, dadurch gekennzeichnet, daß die von den Beeren beim Schritt des Einbringens in ein Vakuum abgegebenen Dämpfe kondensiert werden.

15. Verfahren gemäß Anspruch 14, dadurch gekennzeichnet, daß die kondensierten Dämpfe in das Produkt gemäß einem der Ansprüche 1 oder 2 eingearbeitet werden.

16. Verfahren gemäß Anspruch 14, dadurch gekennzeichnet, daß die kondensierten Dämpfe verworfen werden.

17. Verfahren gemäß Anspruch 16, dadurch gekennzeichnet, daß die kondensierten Dämpfe behandelt werden, um die Aromen zu konzentrieren und das Wasser abzutrennen.

18. Verfahren gemäß einem der Ansprüche 7 bis 17, dadurch gekennzeichnet, daß es kontinuierlich oder diskontinuierlich durchgeführt wird.

19. Verfahren gemäß einem der Ansprüche 7 bis 18, dadurch gekennzeichnet, daß die behandelten Beeren ganz sind oder man sie zuvor abtropfen läßt und/oder preßt und/oder aufkratzt.
